# EUROPÄISCHE PATENTANMELDUNG

(11) **EP 3 766 772 A1**
(43) Veröffentlichungstag der Anmeldung: **20.01.2021**
(21) Anmeldenummer: 20178415.4
(22) Anmeldetag: 05.06.2020
(51) Int. Cl.: B62M 6/55, B62K 19/34

(54) **VERBINDUNGSSYSTEM EINER ANTRIEBSEINHEIT MIT EINEM FAHRRADRAHMEN**

(30) Priorität: 19.07.2019 DE 102019210720
(71) Anmelder: Continental Bicycle Systems GmbH & Co. KG, 65760 Eschborn (DE)
(72) Erfinder: Wurmbäck, Christian - c/o Continental AG, 30419 Hannover (DE)
(74) Vertreter: Finger, Karsten

(57) **Zusammenfassung**

Verbindungssystem, ausgebildet zur Verbindung des Gehäuses einer Fahrrad-Antriebseinheit mit einem Fahrradrahmen, wobei die Antriebseinheit eine die Tretlagerwelle bildende und die Pedalkurbeln endseitig aufnehmende Antriebswelle aufweist und die Antriebswelle zum Antrieb eines im Fahrradrahmen gelagerten Laufrades mit letzterem so verbunden ist, dass das Drehmoment der Antriebswelle auf das Laufrad des Fahrrades übertragen wird, wobei im Gehäuse der Fahrrad-Antriebseinheit eine beidseitige Lagerung der Antriebswelle vorgesehen ist und die jeweiligen gehäuseseitigen Lagersitze der Lagerungen mindestens teilweise in koaxial gegenüberliegenden außenseitigen Vorsprüngen des Gehäuses ausgebildet sind, wobei der Fahrradrahmen erste Verbindungsmittel zur Fixierung der Antriebseinheit aufweist, die mit den außenseitigen Vorsprüngen des Gehäuses zusammenwirken.

## Beschreibung

Die Erfindung betrifft ein Verbindungssystem, ausgebildet zur Verbindung des Gehäuses einer Fahrrad-Antriebseinheit mit einem Fahrradrahmen, wobei die Antriebseinheit) im unteren Endbereich von Sattelrohr und Unterrohr vorgesehen ist und eine die Tretlagerwelle bildende und die Pedalkurbeln endseitig aufnehmende Antriebswelle aufweist und die Antriebswelle zum Antrieb eines im Fahrradrahmen gelagerten Laufrades mit letzterem so verbunden ist, dass das Drehmoment der Antriebswelle auf das Laufrad des Fahrrades übertragen wird. Eine solche Übertragung erfolgt üblicherweise durch Zugmittel und entsprechende Zugmittelräder, also etwa durch eine Kette, die über ein Kettenrad an der Antriebseinheit und Ritzel am Hinterrad läuft.

Als umweltfreundliche Transportmittel sind Fahrräder seit einigen Jahren auch hierzulande wieder stark gefragt und gelten insbesondere innerstädtisch als Alternative zu Fahrzeugen mit Brennstoffantrieb. Dabei hat sich eine bemerkenswerte Vielzahl an Bauweisen herausgebildet, unter denen insbesondere die so genannten Pedelecs oder E-Bikes, also pedalbetriebene Fahrzeuge mit Unterstützungsantrieb, eine herausragende Rolle spielen.

Muskel- oder pedalbetriebene Fahrzeuge mit Unterstützungsantrieb, also etwa elektrische Fahrräder mit wiederaufladbaren Energiespeichern, sind aus dem Stand der Technik in unterschiedlichen Ausführungen bekannt. Die Energiespeicher sind entweder fest mit dem Fahrzeug verbunden, so dass das Fahrzeug zu einer Ladestation gefahren werden muss und dort wieder aufgeladen werden kann, oder können vom Fahrzeug gelöst werden und separat einem Ladevorgang unterzogen werden.

Als Energiespeicher werden üblicherweise spezielle Akkumulatoren verwendet. Es können aber auch handelsübliche wiederaufladbare Batterien verwendet werden, die beispielsweise in einem Gehäuse zusammengeschaltet sind.

Der für Pedelecs oder E-Bikes genutzte Hilfsantrieb ist üblicherweise ein Elektromotor, welcher als Nabenmotor im Vorderrad oder Hinterrad oder als Mittelmotor am Tretlager eines solchen Fahrrads angeordnet sein kann. Motoren am Vorderrad oder Hinterrad haben bekannte Nachteile, die im Wesentlichen darin liegen, dass die Schwerpunktslage der Motoren die Stabilität des Fahrzeugs ungünstig beeinflussen kann. Daher besitzen heute Mittelmotoren am Tretlager einen immer größeren Marktanteil.

Die Elektromotoren sind normalerweise so geschaltet, dass sie nur als Verstärker für die Pedalkraft eingesetzt werden können, wobei die Kraftunterstützung je nach Bauart des Elektrofahrrades auf bestimmte Maximalgeschwindigkeiten begrenzt ist. Der Elektromotor stellt also bei solchen Fahrzeugen lediglich eine Fahrunterstützung bereit, welche üblicherweise durch eine vom Radfahrer initiierte Pedalbetätigung angefordert werden kann. Natürlich gibt es auch Räder, bei denen der Elektroantrieb nicht nur unterstützt, sondern auch als separater bzw. alleiniger Antrieb genutzt wird.

Bei den heutigen Pedelecs oder E-Bikes zeigt ein weiterer Trend dahin, dass Fahrräder möglichst variabel auszurüsten sein sollen, dass Reparaturen möglichst einfach und schnell erfolgen sollen und dass ein Umstellen auf verschiedene Neuerungen und auch andere Motorleistungen durchaus gewünscht ist, ohne dass dazu gleich das gesamte Fahrzeug ausgetauscht werden muss. Insbesondere hat sich dabei der am Rahmen befestigte Mittelmotor als geeignetes Objekt dieser Entwicklung erwiesen. Diese Motoren sollen nicht nur leicht ausgetauscht werden können, sondern sollen auch vor Einbau in die Rahmen separat zu testen sein. Außerdem ist es manchmal gewünscht, dass die Antriebseinheit mit Motorunterstützung gegen eine ausschließlich pedalbetriebene Antriebseinheit ausgetauscht werden kann.

Eine einen Mittelmotor aufweisende Antriebseinheit wird üblicherweise an mehreren Punkten mit einem Fahrradrahmen verschraubt, nämlich in dem Bereich, in dem das Sattelrohr und das vordere Rahmenrohr in ihren unteren Bereichen zusammenlaufen, also im Bereich des Tretlagers.

Auch wenn die Fertigung der Antriebseinheiten und der zugehörigen Motorgehäuse sowie die Fertigung der Rahmen mit ihren Anschlussbereichen für den Motor bzw. das Motorgehäuse in möglichst engen Toleranzen erfolgt, so ist doch stets bei der Montage und beim Austausch der Motoren eine Anpassung und ein Ausgleich der Toleranzen erforderlich. Im Stand der Technik ist es daher üblich, Toleranzen zwischen dem Gehäuse oder den Aufnahmepunkten des Elektromotors und den Rahmen mit seinen entsprechenden Befestigungspunkten dadurch auszugleichen, dass Buchsen mit oder ohne Flansch eingesetzt werden, die den Spalt zwischen Motor und Rahmen überbrücken. Diese Buchsen sitzen entweder in Bohrungen an den Aufnahmepunkten des Motors oder in dafür vorgesehenen Bohrungen im Rahmen. Bei Fixierung durch Schrauben ziehen sich diese Buchsen an den Motor oder an den Rahmen und überbrücken die Toleranzen zwischen Rahmen und Motor. Bei entsprechend großer Ausführung können so auch unterschiedliche Positionierungen des Motors erreicht werden, etwa um eine auf die Position des im hinteren Rahmen angeordneten Laufrades ausgerichtete Ketten- oder Riemenlaufrichtung zu ermöglichen.

Im Stand der Technik sind einige Lösungen für die Anbindung zwischen Antriebseinheit und Fahrradrahmen bereits bekannt. So offenbart die DE 10 2016 112778 A1 eine Lösung, bei der die Toleranzen zwischen Rahmen und Antriebseinheit durch die oben bereits erwähnten verschiebbaren Buchsen oder durch schräge Unterlegscheiben überbrückt werden sollen. Nachteilig ist bei dieser Lösung, dass eine Vielzahl von genau angepassten Teilen zur Montage bereitgestellt werden muss.

Die DE 10 2013 224 668 A1 offenbart zur Anbindung lediglich allgemein gehaltene Hinweise auf Verbindungsmittel wie Schrauben, Schellen oder Adapter und ist daher lediglich auf das Vorhandensein einer zwischen Rahmen und Motor vorgesehenen Anbindungsmöglichkeit als solche gerichtet.

Auch die DE 10 2016 010 457 A1 offenbart in ähnlicher Weise lediglich Befestigungsplatten, die ebenfalls mit Schrauben befestigt werden können.

Viele dieser im Stand der Technik bekannten Verbindungsmöglichkeiten zwischen Motor und Rahmen gehen von herkömmlichen Rahmen aus Metall aus. Bei modernen Fahrrädern sind die Rahmen jedoch zunehmend aus Verbundmaterial gefertigt, beispielsweise aus carbonfaserverstärkten Kunststoffen. Die Verbindungsbereiche zwischen solchen Kunststoffrahmen und den Motorgehäusen oder Antriebseinrichtungen erfordern es bisher, dass besondere Adapter im Kunststoffrahmen eingesetzt und einlaminiert werden müssen, dass die Herstellung natürlich schwieriger und damit teurer macht.

Für die Erfindung bestand daher die Aufgabe, durch einen Verbindungssystem eine verbesserte Befestigungsmöglichkeit einer Antriebseinheit an einem Fahrrad vorzusehen, bei dem keine zusätzlichen Einzelteile verbaut werden müssen, welches auch für die modernen Kunststoffrahmen sowie universell für Pedalantriebe und motorunterstützte Pedalantriebe eingesetzt werden kann und welches möglichst einfach montiert und ohne umfangreiche Vermessungen und Kontrollen in Betrieb gesetzt werden kann. Des Weiteren sollen die Anforderungen an Toleranzen möglichst minimiert werden ohne dass eine unangenehme Geräuschentwicklung entsteht oder es gar durch Lose in der Befestigung während des Betriebs zu Schädigungen im Verbindungsbereich kommt.

Gelöst wird diese Aufgabe durch die Merkmale des Hauptanspruchs. Weitere vorteilhafte Ausbildungen sind in den Unteransprüchen offenbart.

Dabei ist im Gehäuse der Fahrrad-Antriebseinheit eine beidseitige Lagerung der Antriebswelle vorgesehen ist und die jeweiligen gehäuseseitigen Lagersitze der Lagerungen mindestens teilweise in koaxial gegenüberliegenden außenseitigen Vorsprüngen des Gehäuses ausgebildet sind, wobei der Fahrradrahmen erste Verbindungsmittel zur Fixierung der Antriebseinheit aufweist, die mit den außenseitigen Vorsprüngen des Gehäuses zusammenwirken.

Die Lagerung der Tretlagerwelle wird als damit so weit wie möglich nach außen verlegt, das heißt, die Lagerung erfolgt möglichst weit entfernt von der durch den Rahmen aufgespannten Mittenebene des Rahmens bzw. Fahrrades. An diesen Punkten bzw. in diesen Bereichen greifen dann die Verbindungsmittel des Rahmens an, so dass sämtliche um eine Rahmenlängsachse oder um zur Rahmenlängsachse geneigte Achsen drehenden Momente, wie sie etwa bei Pedalbetätigung entstehen, mit dem größtmöglichen Hebelarm und direkt an der Lagerung sicher abgestützt werden können.

Damit wird zunächst das Gehäuse der Antriebseinheit möglichst wenig beansprucht. Dasselbe gilt aber auch für die zum Rahmen gehörigen Verbindungsbereiche bzw. die Verbindungsmittel des Rahmens. Letztere werden dann im Wesentlichen durch Zug- oder Druckkräfte und weniger durch Torsionsmomente beansprucht. Damit ist ein solches Verbindungsystem insbesondere auch für carbonfaserverstärkte Kunststoffrahmen gut geeignet.

Eine vorteilhafte Weiterbildung besteht darin, dass die ersten Verbindungsmittel die außenseitigen Vorsprünge des Gehäuses umgreifen und mit dem Gehäuse oder mit den mit den außenseitigen Vorsprüngen des Gehäuses in Form von Klemm- oder Pressverbindungen zusammenwirken. Damit erhält man sehr einfach herstellbare Verbindungsmittel und demzufolge auch ein sehr einfach wirkendes Verbindungsystem, welches ein oder mehrteilig ausgeführt werden kann.

Insbesondere dann, wenn im Rahmen einer weiteren vorteilhaften Ausbildung die ersten Verbindungsmittel die außenseitigen Vorsprünge des Gehäuses mit Klemm- oder Spannelementen umgreifen, erfolgt zudem eine genaue Positionierung des Rahmens zur Antriebseinheit mithin Hilfe des erfindungsgemäßen Verbindungssystem. Die dazu erforderlichen Toleranzen der zum erfindungsgemäßen Verbindungssystem gehörigen Einzelteile bewegen sich im üblichen fertigungstechnischen Rahmen und sind problemlos herstellbar.

Besonders einfach herstellbar sind zylindrische außenseitige Vorsprünge der Antriebseinheit, sowohl in Bezug auf den innen liegenden Lagersitze für die ebenfalls zylindrischen Lageraußenringe der Tretwellenlager als auch in Bezug auf die dem Rahmen zugehörigen ersten Verbindungsmittel. Letztere können dann zum Beispiel als geteilte Klemmringe ausgeführt werden, deren halbkreisförmigen Schalen zur Erstellung einer Pressverbindung miteinander verschraubt werden.

Eine weitere vorteilhafte Ausbildung besteht darin, dass zweite Verbindungsmittel zwischen Rahmen und Antriebseinheit vorgesehen sind, die ein Drehmoment oder Kippmoment der Antriebseinheit am Rahmen abstützen, nämlich das Antriebsdrehmoment. Damit müssen die Presskräfte in den ersten Verbindungsmitteln nicht so stark ausgebildet werden, dass auch das Kippmoment bzw. das Antriebsmoment am Rahmen durch die Klemm oder Pressverbindung aufgefangen wird. Eine separate Abstützung, etwa im Sinne einer üblichen Drehmomentenstütze, ist hier einfacher und deshalb vorteilhaft.

Eine weitere vorteilhafte Ausbildung besteht darin, dass die zweiten Verbindungsmittel als Schraubverbindungen zwischen Antriebseinheit und Fahrradrahmen ausgebildet sind. Schraubverbindungen sind einfach herzustellen und in jedweder Version oder Ausführung zwischen Rahmen und Antriebsgehäuse zu realisieren und auf die Momentenbelastung anzupassen.

Eine weitere vorteilhafte Ausbildung besteht darin, dass die ersten Verbindungsmittel eine komplementäre Profilierung oder Kodierung im Verbindungs- oder Kontaktbereich zwischen Rahmen und Antriebseinheit aufweisen, die ein Drehmoment oder Kippmoment der Antriebseinheit am Rahmen abstützt. Insbesondere in Form einer weiteren vorteilhaften Ausbildung, die darin besteht, dass die komplementäre Profilierung oder Kodierung im Verbindungs- oder Kontaktbereich zwischen Rahmen und außenseitigen Vorsprüngen der Antriebseinheit vorgesehen ist, erhält man eine sehr einfache Möglichkeit zur drehfest Abstützung eines Antriebsgehäuses in einem Fahrradrahmen.

Eine weitere vorteilhafte Ausbildung besteht darin, dass die Antriebseinheit als elektromotorisch unterstützter Pedalantrieb ausgebildet ist, wobei vorzugsweise der elektrische Motor als Mittelmotor in der Antriebseinheit integriert ist und als Antriebsachse die Tretlagerachse umfasst, auf die auch die Pedale wirken. Man erhält so eine gute Schwerpunktlage des Fahrrades und kann alle entstehenden Kräfte zwischen Antriebseinrichtung und Rahmen direkt am Gehäuse der Antriebseinheit und damit in einem besonders tief liegenden Schwerpunkt des Fahrrades auffangen.

Eine weitere vorteilhafte, sehr einfach zu realisierende Ausbildung besteht darin, dass die Kräfte für die Klemm- oder Pressverbindungen durch Muttern oder Schrauben aufgebracht werden.

Ein solches Verbindungssystem zwischen Antriebseinheit und Fahrradrahmen lässt sich sowohl für Fahrräder ohne elektrischen Antrieb als auch für Fahrräder mit einem Elektromotor als Antrieb verwenden.

Durch die erfindungsgemäße Ausbildung erreicht man eine sichere Fixierung der beiden zu verbindenden Teile Fahrradrahmen und Antriebseinheit, die jegliche Relativbewegung zwischen Rahmen und Antriebseinheit verhindert, also jegliche Drehbewegungen oder lineare Bewegungen zwischen Antriebseinheit und Fahrradrahmen. Dadurch kann eine sehr einfache und fehlertolerante Montage ohne weitere Zusatzteile durchgeführt werden.

Das erfindungsgemäße Verbindungssystem lässt sich natürlich gleichermaßen für einen Kettenantrieb, Riemenantrieb oder einen Kardanwellenantrieb nutzen.

Anhand eines Ausführungsbeispiels soll die Erfindung näher erläutert werden. Es zeigen
- Fig. 1: ein E-Bike oder Elektrofahrrad mit einem elektrischen Hilfsantrieb,
- Fig. 2: die Antriebseinheit eines Elektrofahrrads nach Fig. 1 in vergrößerter Darstellung, jedoch ohne Rahmen und Anbindung an den Rahmen,
- Fig. 3: den unteren Teil des Rahmens mit der verbundenen Antriebseinheit nach Fig.2.

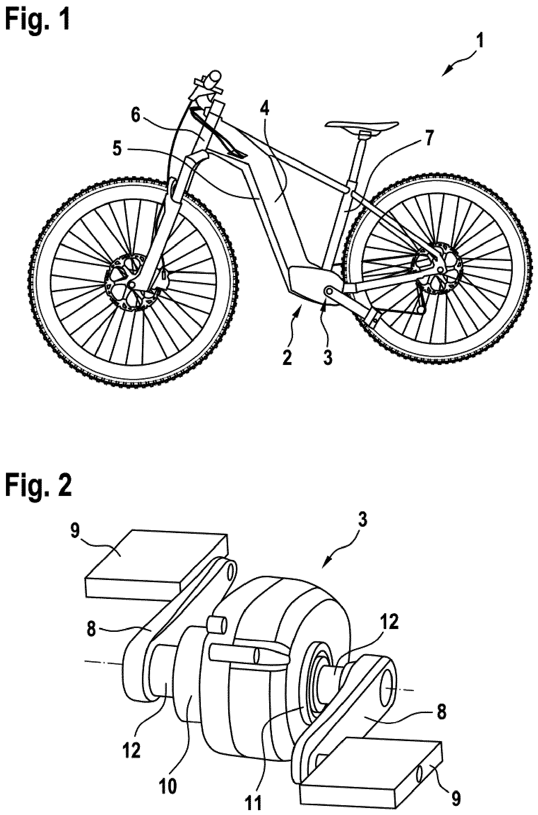

Die Fig. 1 zeigt prinzipiell ein E-Bike oder Elektrofahrrad 1 als pedalbetriebenes Fahrzeug mit elektrischen Unterstützungsantrieb, nämlich einem hier nicht näher dargestellten Elektromotor, der als Mittelmotor 2 in einer Antriebseinheit 3 vorgesehen und in dem Bereich angeordnet ist, in dem Sattelrohr 7 und das Unterrohr bzw. das vordere Rahmenrohr 5 zusammenlaufen. Der Elektromotor ist hier so geschaltet, dass er nur zur Verstärkung der Pedalkraft eingesetzt wird.

In der Antriebseinheit 3 bildet die Antriebswelle gleichzeitig die Tretlagerwelle. Die Pedalkurbeln sind somit beidseitig an den Enden der Tretlager- oder Antriebswelle angeordnet und drehfest mit der Welle verbunden. Die Tretlager- oder Antriebswelle ist zum Antrieb des Hinterrades mit diesem durch eine Kette verbunden, die über ein Kettenrad an der Antriebseinheit und Ritzel am Hinterrad läuft. Damit wird das Drehmoment der Antriebswelle auf das angetriebene Laufrad des Fahrrades übertragen.

Zur Energieversorgung des Elektromotors ist ein lösbar am Fahrrad angeordneter Energiespeicher 4 am oder im vorderen Rahmenrohr 5 vorgesehen. Das so genannte Unterrohr 5, d.h. das vordere untere Rahmenrohr verbindet das Steuerrohr 6 mit dem Sattelrohr 7. Im Verbindungsbereich zwischen Unterrohr 5 und Sattelrohr 7 ist die Antriebseinheit angeordnet, die die Antriebs- oder Tretlagerwelle aufweist.

Fig.2 skizziert die Antriebseinheit 3 noch eine mal etwas detaillierter. Erkennbar sind dort die auf den Tretkurbeln 8 vorgesehenen Pedale 9 sowie die koaxial gegenüberliegenden außenseitigen Vorsprünge 10 und 11 des Gehäuses der Antriebseinheit, in denen die jeweiligen gehäuseseitigen Lagersitze der Lagerungen der beidseitig gelagerten Antriebswelle 12 ausgebildet sind. Zur besseren Übersicht ist hier die Antriebseinheit mit den Tretkurbeln und Pedalen separat dargestellt und ohne den Rahmen bzw. die ersten Verbindungsmittel des Fahrradrahmens zur Fixierung der Antriebseinheit gezeichnet.

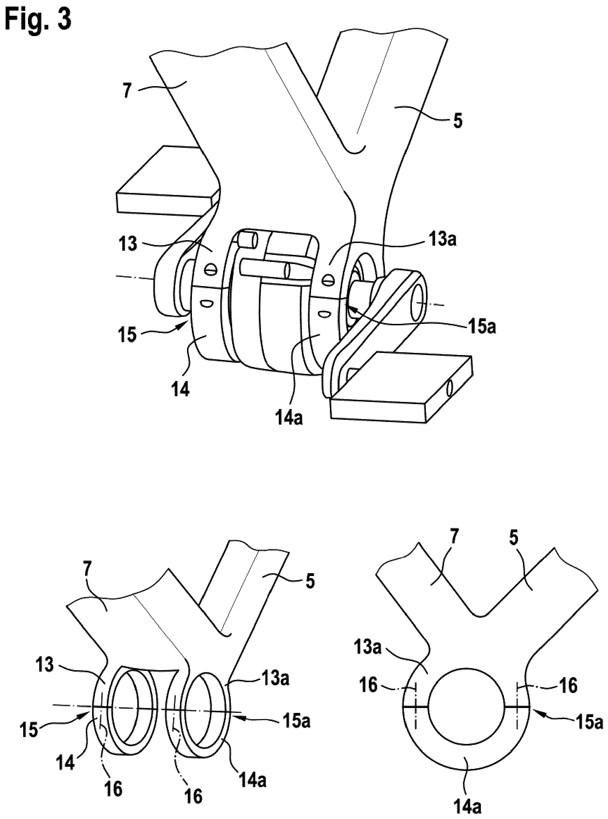

Die Rahmenanbindung ist in einer möglichen Ausführungsform in Fig. 3 skizziert. Fig. 3 zeigt dabei in Ihrem oberen Bereich eine perspektivische Zusammenstellung und darunter eine perspektivische Skizze allein des Rahmens und seiner ersten Verbindungsmittel auf der linken Seite und eine Seitenansicht des Rahmens und seiner ersten Verbindungsmittel auf der rechten Seite.

Der Rahmen weist hier Verbindungsmittel auf, die die beiden zylindrisch ausgebildet außenseitigen Vorsprünge 10, 11 des Gehäuses mit Klemm- oder Spannelementen umgreifen und somit mit den außenseitigen Vorsprüngen in Form von Klemm- oder Pressverbindungen zusammenwirken. Hierzu ist der Verbindungsbereich des Sattelrohres 7 und des vorderen Rahmenrohres 5 auf seiner Unterseite mit halbschalig ausgebildeten Klemm- oder Spannelementen versehen.

Die Klemm oder Spannelemente sind dabei als geteilte, jeweils Halbschalen 13, 13a, 14, 14a bildende Klemmringe 15 und 15a ausgebildet, die die zylindrischen Vorsprünge 10, 11 umgreifen. Nachdem der Motor also mit seinen gehäuseseitigen Vorsprüngen 10, 11 in die oberen Halbschalen 13 uns 13a eingesetzt ist, können die oberen Halbschalen mit dem jeweils zugehörigen unteren Halbschalen 14 und 14a der Klemmringe mit Hilfe von Schlossschrauben 16 verschraubt und damit die Klemmverbindung aufgebaut werden.

### Bezugszeichenliste

### (Teil der Beschreibung)

- 1: Elektrofahrrad
- 2: Elektromotor, Mittelmotor
- 3: Antriebseinheit
- 4: Energiespeicher
- 5: Unterrohr, vorderes unteres Rahmenrohr
- 6: Steuerrohr
- 7: Sattelrohr
- 8: Tretkurbel
- 9: Pedale
- 10: Gehäusevorsprung mit innerem Lagersitz
- 11: Gehäusevorsprung mit innerem Lagersitz
- 12: Antriebswelle/Tretlagerwelle
- 13, 13a: obere Halbschale des Klemmrings
- 14, 14a: untere Halbschale des Klemmrings
- 15, 15a: Klemmring
- 16: Schlossschraube

## Patentansprüche

1. Verbindungssystem, ausgebildet zur Verbindung des Gehäuses einer Fahrrad-Antriebseinheit (3) mit einem Fahrradrahmen, wobei die Antriebseinheit (3) im unteren Endbereich von Sattelrohr (7) und Unterrohr (5) vorgesehen ist und eine die Tretlagerwelle bildende und die Pedalkurbeln endseitig aufnehmende Antriebswelle (12) aufweist und die Antriebswelle zum Antrieb eines im Fahrradrahmen gelagerten Laufrades mit letzterem so verbunden ist, dass das Drehmoment der Antriebswelle (12) auf das Laufrad des Fahrrades übertragen wird, vorzugsweise über ein Zugmittel und entsprechende Zugmittelräder, **dadurch gekennzeichnet, dass** im Gehäuse der Fahrrad-Antriebseinheit eine beidseitige Lagerung der Antriebswelle (12) vorgesehen ist und die jeweiligen gehäuseseitigen Lagersitze der Lagerungen mindestens teilweise in koaxial gegenüberliegenden außenseitigen Vorsprüngen (10, 11) des Gehäuses ausgebildet sind, wobei der Fahrradrahmen erste Verbindungsmittel (15, 15a) zur Fixierung der Antriebseinheit aufweist, die mit den außenseitigen Vorsprüngen (10, 11) des Gehäuses zusammenwirken.

2. Verbindungssystem nach Anspruch 1, bei dem die ersten Verbindungsmittel (15, 15a) die außenseitigen Vorsprünge (10, 11) des Gehäuses umgreifen und mit dem Gehäuse oder mit den mit den außenseitigen Vorsprüngen des Gehäuses in Form von Klemm- oder Pressverbindungen zusammenwirken.

3. Verbindungssystem nach Anspruch 2, bei dem die ersten Verbindungsmittel (15, 15a) die außenseitigen Vorsprünge des Gehäuses mit Klemm- oder Spannelementen (13, 13a, 14, 14a) umgreifen.

4. Verbindungssystem nach einem der Ansprüche 1 bis 3, bei dem die außenseitigen Vorsprünge (10, 11) zylindrisch ausgebildet sind.

5. Verbindungssystem nach einem der Ansprüche 1 bis 4, bei dem zweite Verbindungsmittel zwischen Rahmen und Antriebseinheit vorgesehen sind, die ein Drehmoment oder Kippmoment der Antriebseinheit am Rahmen abstützen.

6. Verbindungssystem nach Anspruch 4, bei dem die zweiten Verbindungsmittel als Schraubverbindungen zwischen Antriebseinheit und Fahrradrahmen ausgebildet sind

7. Verbindungssystem nach einem der Ansprüche 1 bis 4, bei dem die ersten Verbindungsmittel eine komplementäre Profilierung oder Kodierung im Verbindungs- oder Kontaktbereich zwischen Rahmen und Antriebseinheit aufweisen, die ein Drehmoment oder Kippmoment der Antriebseinheit am Rahmen abstützt.

8. Verbindungssystem nach Anspruch 7, bei dem die komplementäre Profilierung oder Kodierung im Verbindungs- oder Kontaktbereich zwischen Rahmen und außenseitigen Vorsprüngen der Antriebseinheit vorgesehen ist.

9. Verbindungssystem nach einem der Ansprüche 1 bis 7, wobei die Antriebseinheit (3) als elektromotorisch unterstützter Pedalantrieb ausgebildet ist, vorzugsweise einen elektrischen Motor (2) umfasst.

10. Verbindungssystem nach einem der Ansprüche 1 bis 9, wobei die Kräfte für die Klemm- oder Pressverbindungen durch Muttern oder Schrauben (16) aufgebracht werden.

11. Fahrrad mit einem nach Anspruch 1 bis 10 ausgebildetem Verbindungssystem zwischen Antriebseinheit und Fahrradrahmen.
